# EUROPÄISCHE PATENTSCHRIFT

(11) **EP 2 962 096 B1**
(45) Veröffentlichungstag und Bekanntmachung des Hinweises auf die Patenterteilung: **28.08.2019**
(21) Anmeldenummer: 14709875.0
(22) Anmeldetag: 20.02.2014
(51) Int. Cl.: G01N 29/07, G01N 29/11, G01N 29/24, G01L 1/25

(54) **VERFAHREN ZUR ERFASSUNG ZEITLICH VERÄNDERLICHER THERMOMECHANISCHER SPANNUNGEN UND/ODER SPANNUNGSGRADIENTEN ÜBER DIE WANDDICKE VON METALLISCHEN KÖRPERN**
METHOD FOR DETERMINATION OF TEMPORALLY VARIABLE THERMOMECHANICAL STRESSES AND/OR STRESS GRADIENTS ALONG THE WALL THICKNESS OF METALLIC PIECES
PROCÉDÉ POUR LA DÉTERMINATION DES TENSIONS THERMOMÉCHANIQUES ET/OU DES GRADIENTS DE TENSION TEMPORELLEMENT VARIABLES LE LONG DE L'ÉPAISSEUR DES PIÈCES MÉTALLIQUES

(30) Priorität: 28.02.2013 DE 102013003500
(43) Veröffentlichungstag der Anmeldung: 06.01.2016
(73) Patentinhaber: Fraunhofer-Gesellschaft zur Förderung der angewandten Forschung e.V., 80686 München (DE); Framatome GmbH, 91052 Erlangen (DE)
(72) Erfinder: ALTPETER, Iris, 66123 Saarbrücken (DE); TSCHUNKY, Ralf, 66130 Saarbrücken (DE); HERRMANN, Hans-Georg, 66132 Saarbrücken (DE); KURZ, Jochen, 66121 Saarbrücken (DE); DOBMANN, Gerd, 66125 Dudweiler (DE); HÜBSCHEN, Gerhard, 66740 Saarlouis (DE); BERGHOLZ, Steffen, 91056 Erlangen (DE); RUDOLPH, Jürgen, 90425 Nürnberg (DE)
(74) Vertreter: Gagel, Roland
(86) Internationale Anmeldenummer: PCT/EP2014/000457
(87) Internationale Veröffentlichungsnummer: WO 2014/131499

(56) Entgegenhaltungen:
- WO-A2-2004/109222
- JP-A- 2008 261 806
- US-A- 5 750 900

## Beschreibung

### Technisches Anwendungsgebiet

Die vorliegende Erfindung betrifft ein Verfahren zur Erfassung zeitlich veränderlicher thermomechanischer Spannungen und/oder Spannungsgradienten über die Wanddicke von metallischen Körpern, insbesondere von Rohrleitungen, bei dem eine Oberflächentemperatur an mindestens einer Messstelle an einer Außenoberfläche des Körpers gemessen wird, aus der ein Temperaturverlauf zwischen der Innenfläche und der Außenoberfläche ermittelt wird.

Die Erfassung zeitlich veränderlicher thermomechanischer Spannungen und/oder Spannungsgradienten ist vor allem an Rohrleitungen von kerntechnischen, konventionellen und solarthermischen Kraftwerken, von chemischen Anlagen oder auch von Windkraftanlagen von großer Bedeutung, da aus der zeitlichen Veränderung der Spannungen bzw. Spannungsgradienten, auch als Spannungs-Zeitreihen bezeichnet, auf Ermüdungszustände der jeweiligen Komponente geschlossen werden kann. Die Maximalspannungen, die für eine Alterung der Komponenten verantwortlich sind, treten jedoch in der Regel an der Innenoberfläche der Rohrleitungen bzw. anschließenden Komponenten auf, bspw. durch schnelle Temperaturänderungen des in der Rohrleitung fließenden Mediums, so dass eine direkte Messung technisch nicht möglich bzw. nur mit unverhältnismäßig großem Aufwand machbar ist.

### Stand der Technik

Für die Überwachung von Rohrleitungen oder anderen Körpern auf Ermüdungserscheinungen ist es bspw. aus J. Rudolph et al., "AREVA Fatigue Concept - A Three Stage Approach to the Fatigue Assessment of Power Plant Components" in: "Nuclear Power Plants", edited by Dr. Soon Heung Chang, KAIST Department of Nuclear & Quantum Engineering, South Korea, Publisher: InTech, March 21, 2012, Seiten 293 bis 316 bekannt, über die Messung der Oberflächentemperatur an der Außenoberfläche der Rohrleitungen auf die Spannungs-Zeitreihen in den beanspruchten Bauteilen zurückzuschließen. Dabei wird aus der Messung der Oberflächentemperatur über eine Finite Elemente Methode die lokale Spannung berechnet.

Mit einer derartigen Technik können allerdings bestimmte schnelle Beanspruchungsfolgen, die bspw. durch instationäre Mischvorgänge von Kalt- und Heißströmungen in der Rohrleitung entstehen können, und die hochzyklische Temperaturänderungen an der Innenoberfläche der Rohrleitung verursachen, messprinzipbedingt nicht mehr erfasst und somit nicht bewertet werden. Derartige hochfrequente Mischvorgänge können jedoch aufgrund der relevanten Auftretenshäufigkeit geringer Beanspruchungsamplituden ebenfalls zu hohen Ermüdungsbeanspruchungen bis hin zu wanddurchdringenden Rissen während des Betriebes führen.

Aus der WO 2011/138027 A1 ist ein Verfahren zur zerstörungsfreien Materialuntersuchung bekannt, mit dem Werkstücke, die hohen mechanischen und thermischen Beanspruchungen ausgesetzt werden, bspw. Rohrleitungen in Kraftwerken, Chemieanlagen oder Raffinerien, hinsichtlich auftretender beanspruchungsbedingter Ermüdungsschädigungen untersucht werden können. Bei diesem Verfahren werden zwei elektromagnetische Ultraschallwandler in einer getrennten Sende-Empfangs-Anordnung eingesetzt, um polarisierte Ultraschallwellen in das Werkstück einzustrahlen und Laufzeiten sowie Amplituden der Ultraschallwellen sowohl in Puls-Echo-Technik als auch in Durchschallungstechnik zu messen. Auch Wirbelstromimpedanz-Messungen werden dabei durchgeführt, um diese Messgrößen mit entsprechenden Referenzdaten zu vergleichen. Durch den Vergleich mit den Referenzdaten können dann mögliche Änderungen in der Mikrostruktur der Wandung des Werkstücks erkannt werden. Das dort beschriebene Verfahren ermöglicht jedoch nicht die Erfassung zeitlich veränderlicher thermomechanischer Spannungsgradienten über die Wanddicke von Rohrleitungen.

Die WO 2004/109222 A2 beschreibt ein Verfahren zur Erfassung von Materialcharakteristiken metallischen Körper, insbesondere von Eisenbahnschienen, bei dem mit elektromagnetischen Ultraschallwandlern Messungen durchgeführt werden, um die Materialcharakteristik, insbesondere die Spannung, Dichte oder Steifheit des Materials, zu bestimmen. Zusätzlich wird die Temperatur an der Messstelle gemessen, um die Ultraschallmessungen aufgrund eventueller Temperatureffekte zu korrigieren.

Die US 5,570,900 A beschreibt ein Verfahren zur Bestimmung von Spannungen an einem Werkstück mit Hilfe von elektromagnetischen Ultraschallwandlern. Bei dieser Druckschrift geht es im Wesentlichen um die mechanische Konstruktion der Messeinrichtung, mit der der Ultraschallwandler an das Werkstück angesetzt wird.

Die Aufgabe der vorliegenden Erfindung besteht darin, ein Verfahren zur Erfassung zeitlich veränderlicher thermomechanischer Spannungen und/oder Spannungsgradienten über die Wanddicke von metallischen Körpern, insbesondere von Rohrleitungen, anzugeben, mit dem auch schnelle Spannungsänderungen über die Wanddicke ausgehend vom Inneren des Körpers von der Außenoberfläche aus erfasst werden können.

### Darstellung der Erfindung

Die Aufgabe wird mit dem Verfahren nach Patentanspruch 1 gelöst. Vorteilhafte Ausgestaltungen des Verfahrens sind Gegenstand der abhängigen Patentansprüche oder lassen sich der nachfolgenden Beschreibung sowie den Ausführungsbeispielen entnehmen.

Bei dem vorgeschlagenen Verfahren zur Erfassung zeitlich veränderlicher thermomechanischer Spannungen und/oder Spannungsgradienten über die Wanddicke (über den Querschnitt des Körpers bzw. über die Dicke der Rohrleitungswand) von metallischen Körpern werden zwei unterschiedliche Messverfahren kombiniert. Zum einen wird die Oberflächentemperatur an der Außenoberfläche des Körpers gemessen, aus der ein Temperaturverlauf zwischen der Innenfläche und der Außenoberfläche ermittelt wird. Zum anderen werden zusätzlich zu dieser Messung mit elektromagnetischen Ultraschallwandlern Messungen an mindestens einer Messstelle an der Außenoberfläche durchgeführt, um über die gemessene Temperatur und den daraus ermittelten Temperaturverlauf aus den zusätzlichen Messungen den zeitlichen Verlauf der Spannungen und/oder Spannungsgradienten über die Wanddicke des Körpers zu bestimmen. Die für die Bestimmung der Spannungen und/oder Spannungsgradienten erforderlichen Informationen werden dabei aus einer Kombination der aus der Temperaturmessung erhaltenen Informationen mit den Messdaten erhalten, die mit den elektromagnetischen Ultraschallwandlern gewonnen werden. Die Spannungen und/oder Spannungsgradienten werden vorzugsweise durch Auswertung von Ultraschall-Laufzeit-, -Amplituden- und/oder Wirbelstromimpedanz-Messungen in Verbindung mit den Temperaturmessungen bestimmt.

Der Einsatz elektromagnetischer Ultraschallwandler hat den Vorteil, dass damit auch Rohrleitungen unter Betriebsbedingungen, bspw. bei Temperaturen über 200° C, bei Strahlungsbeanspruchungen oder bei hohen Betriebsdrücken innerhalb der Körper vermessen werden können. Insbesondere bieten elektromagnetische Ultraschallwandler die Möglichkeit, durch eine rasche Messdatenerfassung auch schnelle Spannungsänderungen, bspw. verursacht durch plötzlich auftretende Temperaturänderungen im Inneren der Körper, zu erfassen.

Hiermit lassen sich High Cycle Fatigue (HCF) Beanspruchungskollektive prinzipiell identifizieren und bewerten. Die hierbei erfindungsgemäß durchgeführten Ultraschalllaufzeit-, -Amplituden-Messungen und/oder Wirbelstromimpedanz-Messungen haben den Vorteil, dass damit auch nicht direkt zugängliche Beanspruchungen an der Innenoberfläche der Körper erfasst werden können. Die Ultraschall-Laufzeit-, -Amplituden-Messung kann dabei in getrennter Sender-Empfänger-Anordnung oder in Puls-Echo-Technik oder in einer Kombination beider Techniken durchgeführt werden. Weiterhin kann auch die Sende- und Empfangsamplitude mitprotokolliert und damit als zusätzliche Größe bei der Auswertung verwendet werden.

Bei dem vorliegenden Verfahren wird somit durch die zusätzliche Messung mit elektromagnetischen Ultraschallwandlern und mit den damit durchgeführten Ultraschall-Laufzeit-, -Amplituden- und/oder Wirbelstromimpedanz -Messungen die Lücke hinsichtlich schneller Spannungsänderungen in den derzeitigen rein temperaturbasierten Überwachungsmethoden von Rohrleitungen geschlossen. In Kombination mit der Temperaturüberwachung erweitern diese elektromagnetischen Ultraschallprüfmethoden die Aussagefähigkeit bekannter Ermüdungsüberwachungssysteme. Es lassen sich damit auch bisher nicht zu erfassende hochfrequente ermüdungsrelevante Beanspruchungs-ZeitFunktionen (Spannungs-Zeitreihen) registrieren. Damit können Rückschlüsse auf ermüdungsrelevante Beanspruchungen und somit auf den zeitlichen Verlauf des Ermüdungszustandes des jeweiligen Körpers bzw. Rohres gezogen werden. Durch den Einsatz elektromagnetischer Ultraschallwandler lassen sich Ultraschall-Laufzeit-, - Amplituden- und Wirbelstromimpedanz-Messungen in einer Sensorik bzw. einem Prüfkopf kombinieren.

Bei dem vorgeschlagenen Verfahren wird ausgenutzt, dass die aus der Temperaturmessung gewonnenen Daten, insbesondere der daraus ableitbare Temperatur- und Spannungsverlauf über der Wanddicke des Körpers, genutzt werden können, um aus den Messdaten der Ultraschall- bzw. Wirbelstrommessungen die Spannungen oder Spannungsgradienten über die Wanddicke des Körpers, insbesondere bei hochfrequenten Spannungsänderungen, zu bestimmen. Ohne die zusätzlichen Informationen aus der Temperaturmessung wäre dies nicht mit der vorliegenden Genauigkeit möglich, da der Temperatureinfluss auf die Ultraschall- und Wirbelstromimpedanz-Messdaten kompensiert werden muss, um die Genauigkeit zu erhalten.

Im Folgenden werden das Verfahren sowie dessen Ausgestaltungen anhand der Vermessung bzw. Überwachung von Rohrleitungen erläutert. Diese Erläuterungen lassen sich jedoch ohne weiteres auch auf andere Körper übertragen.

Erfindungsgemäß wird für die Bestimmung der Spannungen bzw. Spannungsgradienten ein Schichtmodell eingesetzt. Mit diesem Schichtmodell werden iterativnummerisch die Spannungen bzw. Spannungsgradienten über der Wanddicke der Rohrleitung ermittelt. Das Modell wird dabei unter Nutzung der Temperaturmessdaten und der daraus gewonnenen Informationen vorab kalibriert, indem mit dem gesamten Messsystem definierte bekannte realistische Beanspruchungen vermessen werden und die gewonnen Daten erfasst und archiviert werden. Im Einzelnen werden dazu als Modelleingangsgrößen die aus der Temperaturmessung nummerisch ermittelten Temperatur- und Spannungsverläufe über der Wanddicke der Rohrleitung, die in den verschiedenen Schichten als stückweise konstant approximiert werden, sowie die temperaturkorrigierten Ultraschall-Laufzeiten, -Amplituden und Wirbelstromimpedanzen genutzt.

Das Schichtmodell liefert als Ausgangsgrößen sowohl schichtspezifische Spannungsverläufe als auch schichtspezifische Ultraschall-Laufzeiten, -Amplituden und Wirbelstromimpedanzen, die temperaturkompensiert sind. Um im Anwendungsfall schnell den Spannungsverlauf in der Rohrleitungswand bestimmen zu können, wird aus den gemessenen Ultraschall-Laufzeiten, -Amplituden und Wirbelstromimpedanzen in den einzelnen Schichten auf die jeweilige Spannung geschlossen. Um diesen Zusammenhang zwischen den Spannungen in den Schichten und den schichtspezifischen Ultraschall-Laufzeiten, -Amplituden- und Wirbelstromimpedanzwerten zu ermitteln, bedarf es einer iterativen Optimierung des Schichtmodells. Zur Optimierung können zwei unterschiedliche Vorgehensweisen angewendet werden.

Die erste beispielhafte Vorgehensweise beruht auf einem Mustererkennungsansatz, der mit Hilfe von Ähnlichkeitsbetrachtungen Rückschlüsse auf die Spannungen in den einzelnen Schichten zulässt. Hierbei werden die schichtbezogenen Spannungsverläufe mit den schichtbezogenen Ultraschall-Laufzeit-, -Amplituden- und Wirbelstromimpedanz-Größen über Algorithmen verknüpft, die die schichtbezogenen Daten miteinander in Relation bringen und somit einen Prüfgrößenraum aus den schichtbezogenen Größen aufspannen. Dieser mehrdimensionale Prüfgrößenraum wird in der Optimierungsphase bzw. bei der Kalibrierung iterativ aufgespannt und dient im Anschluss dazu, die realen Messungen bezüglich ihrer Ähnlichkeit in den Raumdimensionen zu bewerten.

Bei der zweiten Vorgehensweise handelt es sich um einen physikalischen Ansatz. Dieser setzt die Kenntnis bzw. Ermittlung der akustoelastischen Konstanten des Rohrmaterials bei verschiedenen Betriebstemperaturen und die elektrischen Leitfähigkeiten voraus und gestattet es, hieraus den Spannungszustand für jede Schicht durch iterative Anpassung des Modells zu ermitteln, indem die temperaturkompensierten Ultraschall-Laufzeiten mit den ebenfalls temperaturkompensierten akustoelastischen Konstanten verrechnet werden und gegebenenfalls noch die Ultraschallamplituden und Wirbelstromimpedanzen zusätzlich verwendet werden.

Der Vorteil der iterativen Optimierung des Schichtmodells basierend auf physikalischen Gesetzmäßigkeiten bzw. auf einem Mustererkennungsansatz besteht in der höheren Messgeschwindigkeit sowie der sofortigen Verfügbarkeit von Informationen über die gesamte Dicke der Rohrwand. Des Weiteren ermöglicht die iterative Optimierung die Verwendung von zeitlich vorhergehenden Messdaten (Historie der Messungen) und Messdaten zum Auswertezeitpunkt (Ultraschall und Wirbelstromgrößen sowie die momentane Temperatur an der Außenwand) zur Genauigkeitssteigerung des Modells. Insbesondere werden durch Einsatz dieses Schichtmodells auch die Spannungen bzw. Spannungsgradienten an der Rohrinnenwand gewonnen, die der innersten Schicht des Schichtmodells entspricht.

Für die Messungen mit den elektromagnetischen Ultraschallwandlern sind unterschiedliche Anordnungen und Ausgestaltungen der Wandler möglich. Prinzipiell lassen sich als elektromagnetische Ultraschallwandler unterschiedliche Kombinationswandler einsetzen, beispielsweise bestehend aus mindestens einer HF-Spule und einem Elektromagneten oder einem oder mehreren Permanentmagneten, wobei die HF-Spule sowohl zum Senden und/oder Empfangen des elektromagnetisch angeregten Ultraschalls als auch zur Wirbelstromimpedanzmessung verwendet werden kann. Weiterhin lassen sich beispielsweise auch Kombinationswandler einsetzen, die aus mindestens zwei HF-Spulen und einem Elektromagneten bzw. zwei HF-Spulen und einem oder mehreren Permanentmagneten bestehen. Eine HF-Spule wird dabei zum Senden und/oder Empfangen des elektromagnetisch angeregten Ultraschalls und die andere HF-Spule als separate Wirbelstromspule benutzt. Die Wirbelstromanregung kann mit demselben Impuls wie die Erzeugung der Ultraschallwelle oder auch über einen separaten Wirbelstromgenerator erfolgen. Geeignete Ultraschallwandler sind dem Fachmann aus dem Stand der Technik bekannt.

Besonders vorteilhaft werden wenigstens zwei elektromagnetische Ultraschallwandler an jeder Messstelle eingesetzt, die mit unterschiedlichen Polarisationsrichtungen im Puls-Echo-Betrieb arbeiten. Die HF-Spule dient bei diesen Wandlern sowohl als Sendeals auch als Empfangsspule. Die Wandler sind so ausgebildet bzw. angeordnet, dass sie senkrecht zueinander linear polarisierte Transversalwellen senkrecht in das Rohr einstrahlen. Vorzugsweise ist die Transversalwelle des einen Ultraschallwandlers in axialer Richtung des Rohrs und die andere in Umfangsrichtung des Rohrs polarisiert. Auf diese Weise können die in diesen Richtungen erzeugten unterschiedlichen Spannungen optimal erfasst werden.

Vorzugsweise werden zusätzlich zwei Paare weiterer elektromagnetischer Ultraschallwandler in getrennter Sende-Empfangs-Anordnung an der jeweiligen Messstelle eingesetzt. Bei diesen Paaren dient ein Wandler als Sender und der andere als Empfänger. Diese Wandler können mit zwei unterschiedlichen Wellentypen in Durchschallung arbeiten, sowohl mit Rayleigh- als auch mit horizontal polarisierten Transversalwellen. Die beiden Paare dieser zusätzlichen elektromagnetischen Ultraschallwandler werden zur Erfassung der Spannung in der Rohrwand mit zwei um 90° zueinander orientierten Polarisationen, vorzugsweise in axialer Richtung und in Umfangsrichtung des Rohrs, betrieben. Sie sind hierzu kreuzförmig angeordnet.

Es besteht auch die Möglichkeit, anders polarisierte Ultraschallwellen in die Rohrwandung einzustrahlen. So kann bspw. bei kleineren Wandstärken anstelle der Rayleigh-Welle oder der streifend eingeschallten horizontal polarisierten Welle auch eine Plattenwelle (SH/Lamb-Plattenwelle) verwendet werden. Für die senkrechte Einstrahlung ist es auch möglich, radial polarisierte Wellen zu nutzen.

Die Ultraschallwandler, im Folgenden auch als Prüfköpfe bezeichnet, werden vorzugsweise gurtartig über den Umfang des Rohres angebracht. Je dichter diese Prüfkopfanordnung am Rohr entlang des Umfangs platziert wird, desto höher ist die laterale Auflösung für die Spannungsbestimmung entlang des Rohrumfangs.

Es können auch gleichzeitig mehrere Prüfgurte mit Kombinationswandlern für zusätzliche Redundanzen eingesetzt werden. Auch eine Variation der Prüfkopf- bzw. Wandlertypen für jeden Gurt bringt eine zusätzliche Redundanz. Durch die Nutzung der Daten unterschiedlicher Prüfkopftypen, unterschiedlicher Wellentypen und/oder unterschiedlicher Messfrequenzen können zusätzliche Informationen gewonnen werden.

In einer weiteren Ausgestaltung, die bei ferromagnetischem Material der Rohrleitung zum Einsatz kommen kann, werden Kombinationswandler mit Elektromagneten eingesetzt, mit denen die Hysterese durchgesteuert wird, um die Überlagerungspermeabilität (Auswertung der Permeabilität bei definierten Arbeitspunkten bzw. Magnetfeldern) und/oder die dynamische Magnetostriktion (Auswertung der Ultraschallamplitude bei definierten Arbeitspunkten bzw. Magnetfeldern) als zusätzliche oberflächennahe Größe messen zu können.

### Kurze Beschreibung der Zeichnungen

Das vorgeschlagene Verfahren wird nachfolgend anhand eines Ausführungsbeispiels in Verbindung mit den Zeichnungen nochmals näher erläutert. Hierbei zeigen:
- Fig. 1: zwei Beispiele für die Anordnung der Ultraschall-Prüfköpfe an einer Messstelle gemäß einer Ausgestaltung des vorgeschlagenen Verfahrens;
- Fig. 2: Beispiele für die Verteilung der Prüfköpfe bzw. Messstellen über den Umfang eines Rohrs;
- Fig. 3: eine schematische Darstellung der Bestimmung der Spannungen bzw. Spannungsgradienten über ein Schichtmodell einer Rohrleitung;
- Fig. 4: ein Beispiel für einen Aufbau eines der Prüfköpfe zur Erzeugung einer senkrecht einschallenden linear polarisierten Transversalwelle;
- Fig. 5: ein weiteres Beispiel für den Aufbau eines Prüfkopfes zur Erzeugung einer senkrecht einschallenden linear polarisierten Transversalwelle;
- Fig. 6: ein Beispiel für den Aufbau eines Prüfkopfes zur Erzeugung einer Rayleighwelle; und
- Fig. 7: ein Beispiel für den Aufbau eines Prüfkopfes zur Erzeugung einer horizontal polarisierten Transversalwelle.

### Wege zur Ausführung der Erfindung

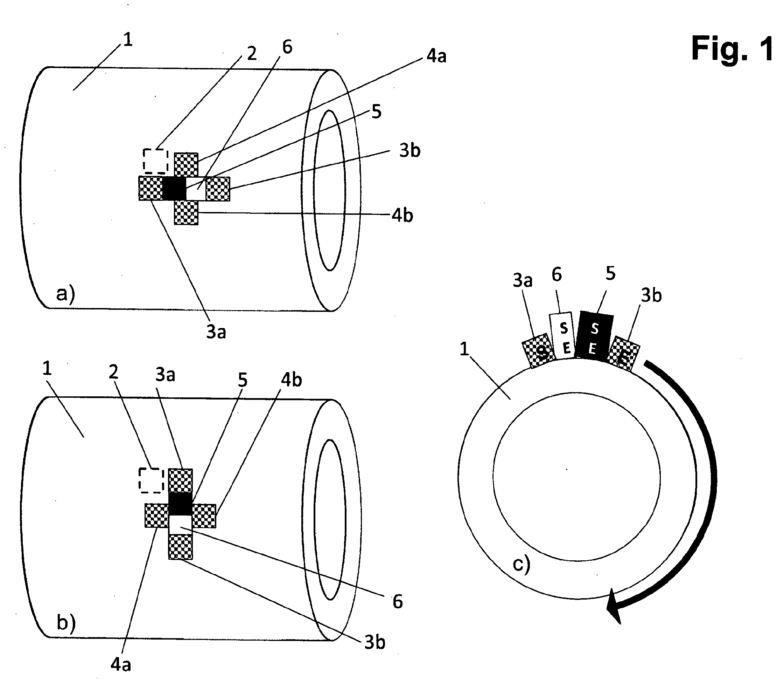

Bei dem vorgeschlagenen Verfahren wird die bekannte Temperaturmessung zur Ermüdungsüberwachung an einer Rohrleitung mit der Messung von Ultraschall-Laufzeiten, -Amplituden- und/oder Wirbelstromimpedanzen in der Rohrleitungswand kombiniert, die mit elektromagnetischen Ultraschallwandlern durchgeführt wird. Die Messstellen an der Außenseite des Rohres werden dabei je nach Bedarf gewählt. Figur 1 zeigt in schematischer Darstellung einen Abschnitt eines Rohres 1, an dessen Außenseite eine Prüfkopfanordnung für die Durchführung der Ultraschall-Laufzeit-, -Amplituden- und Wirbelstromimpedanz-Messungen dargestellt ist. Die Figuren 1a und 1b zeigen hierbei zwei unterschiedliche Anordnungsmöglichkeiten an der entsprechenden Messstelle. Der eingesetzte Temperatursensor 2 zur gleichzeitigen Messung der Temperatur der Außenoberfläche an dieser Messstelle ist in der Figur ebenfalls schematisch angedeutet. Dieser Temperatursensor, bspw. in Form von Thermoelementen, kann auch in die Prüfköpfe integriert sein. Weiterhin können auch mehrere Temperatursensoren 2 an jeder Messstelle vorhanden sein. Die Temperaturmessung kann selbstverständlich auch unmittelbar vor oder nach der Messung mit den Ultraschallprüfköpfen erfolgen.

Aus der Figur 1 wird deutlich, dass unterschiedliche Ultraschallwandler bzw. Prüfköpfe für die Ultraschall- und/oder Wirbelstrommessungen eingesetzt werden können. Es handelt sich hierbei um getrennte Sende-Empfangs-Anordnungen mit getrennten Sende- und Empfangswandlern 3a, 3b, 4a, 4b und um integrierte Sende-Empfangs-Anordnungen 5, 6, die im Puls-Echo-Betrieb arbeiten. Mit den getrennten Sende- und Empfangswandlern 3a, 3b bzw. 4a, 4b können entweder Rayleigh-Wellen oder horizontal polarisierte Transversalwellen in axialer Richtung der Rohrwand erzeugt werden. Diese Prüfköpfe arbeiten in Durchschallung, wobei die Ultraschallwellen vom Sender 3a, 4a, abgestrahlt und nach Propagation in der Rohrwand in axialer Richtung des Rohrs vom jeweiligen Ultraschallempfänger 3b, 4b wieder empfangen werden. Zur Erfassung der Spannung in der Rohrwand müssen hierbei jeweils zwei Paare aus Sendewandler 3a, 4a und Empfangswandler 3b, 4b mit um 90° zueinander orientierten Polarisationen - entlang der Rohrachse und im Umfangsrichtung des Rohrs - eingesetzt werden. Die beiden Prüfkopfpaare sind hierzu kreuzförmig angeordnet, wie dies aus den Figuren 1a und 1b ersichtlich ist. Die beiden weiteren Ultraschallwandler 5, 6 sind integrierte Sende- und Empfangswandler, die linear polarisierte Transversalwellen mit unterschiedlichen (zueinander senkrechten) Polarisationsrichtungen senkrecht in das Rohr einstrahlen. Bei diesen Wandlern dient die HF-Spule sowohl zum Senden der Ultraschallsignale als auch zum Empfangen der an der Rohrinnenwand reflektierten Ultraschallsignale. Der eine Wandler 5 erzeugt dabei linear in Umfangsrichtung des Rohres polarisierte Transversalwellen, der andere Wandler 6 linear in axialer Richtung des Rohres polarisierte Transversalwellen. Die Wirbelstromimpedanzmessung kann in bekannter Weise über die integrierten HF-Spulen durchgeführt werden. Selbstverständlich können auch Kombinationswandler eingesetzt werden, bei denen eine zusätzliche HF-Spule für die Wirbelstromimpedanz-Messung vorgesehen ist. Die Figuren 1a und 1b zeigen unterschiedliche Orientierungen bzw. Anordnungen der eingesetzten Prüfköpfe, wie sie beim vorliegenden Verfahren eingesetzt werden können. Figur 1c zeigt nochmals beispielhaft einen Schnitt durch das Rohr mit den entsprechend aufgesetzten Prüfköpfen. Die Prüfköpfe werden vorzugsweise gurtartig an unterschiedlichen Messstellen an der Außenwandung des Rohres eingesetzt, wie dies schematisch mit dem Pfeil in der Figur 1c angedeutet ist.

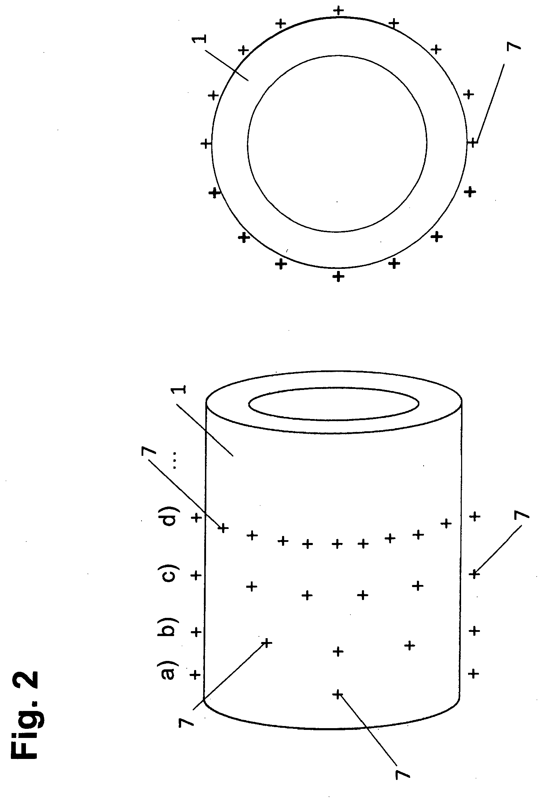

Figur 2 zeigt hierzu mögliche Verteilungen der Positionen der Messstellen bzw. der Positionen der in Figur 1 dargestellten Prüfkopfanordnungen 7 über den Umfang eines Rohres 1. Je dichter die kreuzförmigen Prüfkopfanordnungen 7 entlang des Umfangs des Rohres platziert werden, desto höher ist die laterale Auflösung entlang des Rohrumfangs. Figur 2 zeigt hierzu beispielhaft in der linken Teilabbildung vier verschiedene Verteilungen der Prüfkopfanordnungen 7 bzw. Messstellen an einem Rohr 1, die mit a) bis d) bezeichnet sind. Eine höhere Dichte der Messstellen bzw. Prüfkopfanordnungen 7 führt zu einer höheren Auflösung. Im rechten Teil der Figur ist eine derartige Anordnung nochmals im Schnitt durch das Rohr 1 dargestellt. Hierbei besteht auch die Möglichkeit, lediglich eine Hälfte oder auch nur ein Viertel des Rohres mit den Prüfköpfen zu belegen, falls eine symmetrische Beanspruchung des Rohrs vorliegt. Bei unsymmetrischer Beanspruchung sollten die Prüfköpfe über den gesamten Umfang des Rohres verteilt werden, wie in der Figur 2 angedeutet. Ist zu erwarten, dass es an der Rohrleitung entlang der Rohrachse zu inhomogenen Beanspruchungen kommt, so werden durch den Einsatz von mehreren Prüfkopfgurten entlang der Rohrachse auch diese inhomogenen Beanspruchungen detektiert.

Gegebenenfalls kann die in Figur 1 gezeigte kreuzförmige Anordnung der Prüfköpfe auch vereinfacht werden, indem auf die getrennten Sende-Empfangs-Anordnungen mit den Prüfköpfen 3a, 3b, 4a, 4b verzichtet wird. In diesem Fall können dann allerdings keine Informationen über lokale Spannungen entlang der Rohrachse gewonnen werden. Selbstverständlich ist es jedoch möglich, die relativen Spannungsänderungen über die Dicke der Rohrwand zu erfassen.

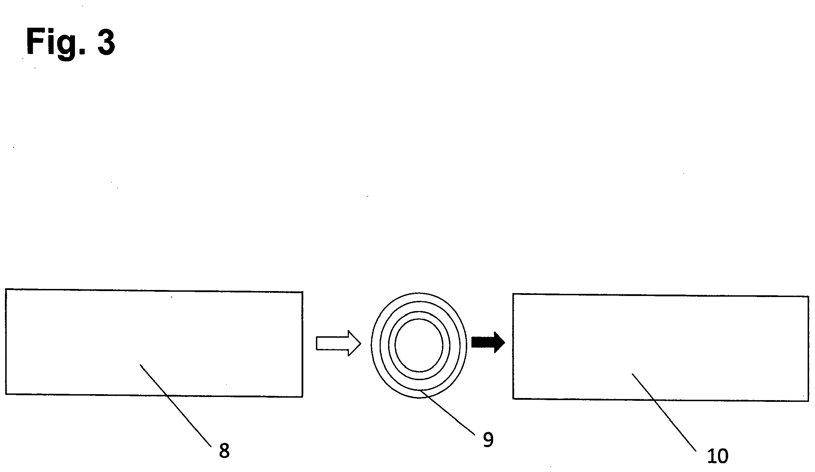

Figur 3 zeigt schematisch die Vorgehensweise bei der Bestimmung der Spannungen bzw. Spannungsgradienten an der Rohrinnenseite auf Basis eines Schichtmodells. Bei diesem schematisch angedeuteten Schichtmodell 9 wird die Rohrwandung in verschiedene Schichten unterteilt, wie dies in der Figur angedeutet ist. Als Modelleingangsgrößen 8 dienen die gemessenen Wirbelstromimpedanzen, die gemessenen UltraschallLaufzeiten, -Amplituden, der aus der Temperaturmessung ermittelte Temperaturverlauf und der aus der Temperaturmessung ermittelte Spannungsverlauf. Das Schichtmodell 9 liefert dann als Modellausgangsgrößen 10 schichtbezogene Wirbelstromimpedanzen, schichtbezogene Ultraschall-Laufzeiten, -Amplituden und einen schichtbezogenen Spannungsverlauf, wobei der Spannungsverlauf an der innersten Schicht des Schichtmodells den Spannungen bzw. Spannungsgradienten an der Innenseite des Rohres entspricht.

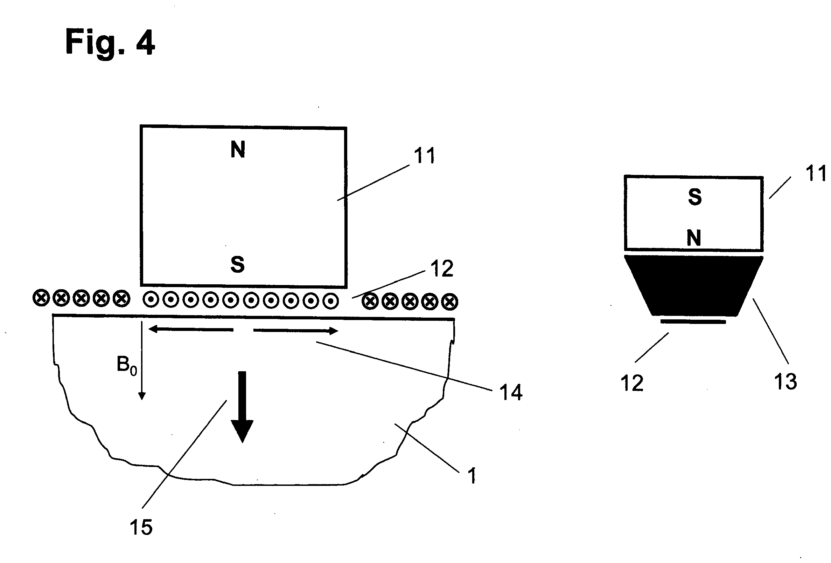

Die Figuren 4 bis 7 zeigen Beispiele für Ultraschallwandler bzw. Prüfköpfe wie sie bei dem vorgeschlagenen Verfahren eingesetzt werden können. Die Figuren zeigen, dass unterschiedliche Wandlertypen zur Ultraschall-Laufzeit, -Amplituden-Messung sowie auch zur Messung der Wirbelstromimpedanzen genutzt werden können. Figur 4 zeigt ein Beispiel für den Aufbau eines senkrecht einschallenden Ultraschallwandlers, der linear polarisierte Transversalwellen erzeugt. Der Wandler weist einen Magneten 11 über einer HF-Spule 12 auf. Bei dem Magneten kann es sich sowohl um einen Permanentmagneten - wie in der Figur dargestellt - als auch um einen Elektromagneten handeln. Durch den Magneten wird ein statisches Magnetfeld B₀ in der Rohrwandung erzeugt, wie dies in der Figur angedeutet ist. Über die Wechselspannung an der im dargestellten Querschnitt erkennbaren HF-Spule 12 wird in der Rohrwandung eine Ultraschallwelle angeregt, deren Schwingungsrichtung bzw. Polarisation 14 und Ausbreitungsrichtung 15 in der Figur ebenfalls angedeutet sind. Wie im rechten Teil der Figur zu erkennen ist, kann zwischen der HF-Spule 12 und dem Magneten 11 auch ein zusätzlicher Konzentrator 13 zur Verstärkung des statischen Magnetfeldes eingesetzt werden.

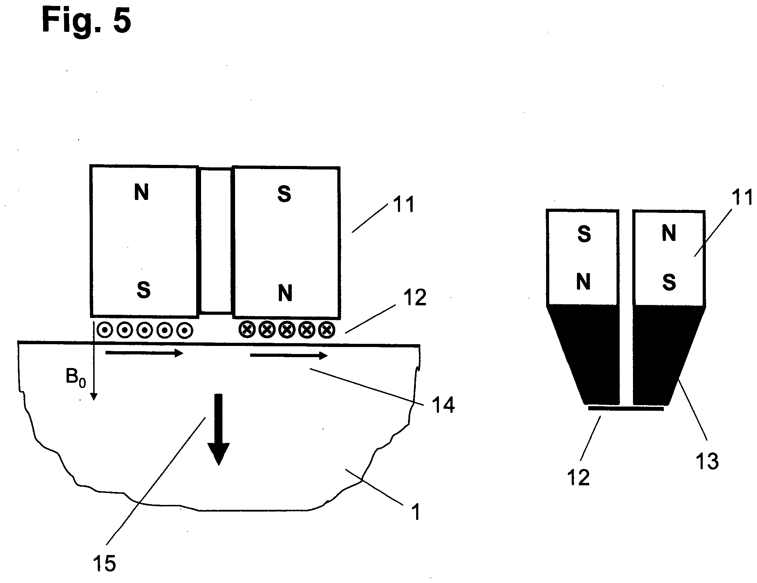

Eine alternative Ausgestaltung eines derartigen Ultraschallwandlers zur senkrechten Einschallung einer linear polarisierten Transversalwelle ist in Figur 5 dargestellt. In diesem Beispiel werden zwei Magnete 11 über der HF-Spule 12 eingesetzt.

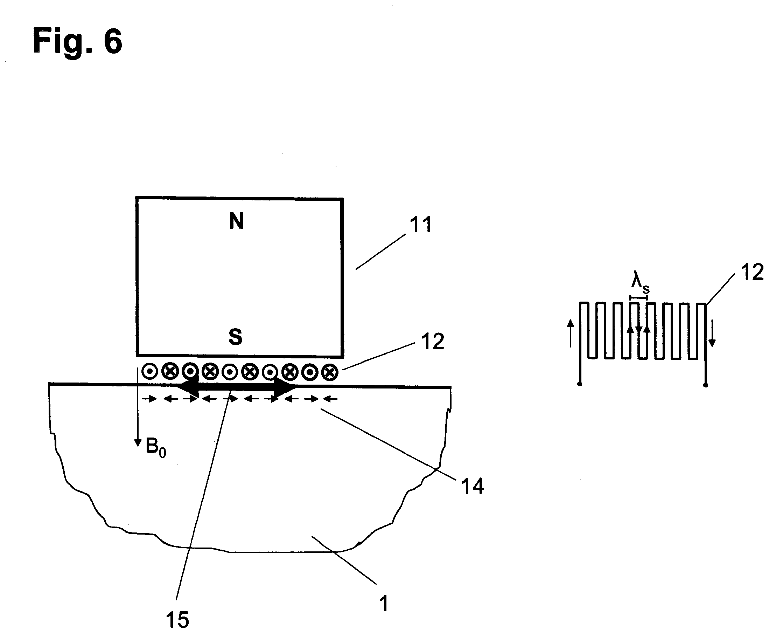

Figur 6 zeigt ein Beispiel für den Aufbau eines elektromagnetischen Ultraschallwandlers, mit dem Rayleigh-Wellen erzeugt werden. Bei diesem Wandler wird eine mäanderförmige HF-Spule 11 eingesetzt, die im rechten Teil der Figur in Draufsicht zu erkennen ist. Die Ausbreitungsrichtung 15 der Ultraschallwelle sowie die Schwingungsrichtung 14 der Ultraschallwelle sind in der Figur ebenfalls angedeutet.

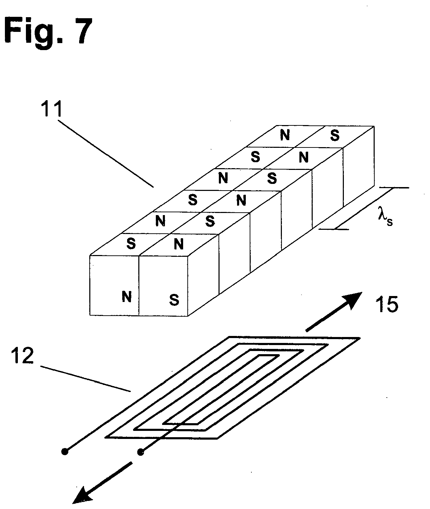

Ein Beispiel eines Ultraschallwandlers für die Erzeugung einer horizontal polarisierten Transversalwelle zeigt Figur 7. Bei diesem Ultraschallwandler werden Permanentmagnete 11 mit alternierender Polung in periodischer Anordnung eingesetzt, wie dies aus der Figur zu erkennen ist. Über die darunter liegende HF-Spule 12 wird dann eine Ultraschallwelle erzeugt, deren Ausbreitungsrichtung 15 entlang der Rohroberfläche wiederum in der Figur schematisch dargestellt ist.

Die Wandler der Figuren 4 bis 7 sind aus dem Stand der Technik bekannt, so dass an dieser Stelle nicht noch näher auf deren Aufbau und Funktionsweise eingegangen wird.

Mit jedem einzelnen der dargestellten Ultraschallwandler kann eine Wirbelstromimpedanz-Messung bei unterschiedlichen Frequenzen und somit unterschiedlichen Eindringtiefen in die Rohrleitung realisiert werden. Die Wirbelstromimpedanz-Messung kann dabei mit der auch für die Ultraschallerzeugung eingesetzten HF-Spule des Wandlers durchgeführt werden. Selbstverständlich ist es jedoch auch möglich, eine separate HF-Spule für eine derartige Wirbelstrommessung am Wandler anzuordnen.

### Bezugszeichenliste

- 1: Rohrleitung
- 2: Temperatursensor
- 3a: Ultraschallwandler (Sender)
- 3b: Ultraschallwandler (Empfänger)
- 4a: Ultraschallwandler (Sender)
- 4b: Ultraschallwandler (Empfänger)
- 5: Ultraschallwandler (Sender/Empfänger)
- 6: Ultraschallwandler (Sender/Empfänger)
- 7: Prüfkopfanordnung
- 8: Modelleingangsgrößen
- 9: Schichtmodell
- 10: Modellausgangsgrößen
- 11: Magnet
- 12: HF-Spule
- 13: Konzentrator
- 14: Schwingungsrichtung/Polarisation
- 15: Ausbreitungsrichtung der Ultraschallwelle

## Patentansprüche

1. Verfahren zur Erfassung zeitlich veränderlicher thermomechanischer Spannungen und/oder Spannungsgradienten über die Wanddicke von metallischen Körpern (1), insbesondere Rohrleitungen,
bei dem eine Temperatur an mindestens einer Messstelle an einer Außenoberfläche des Körpers (1) gemessen wird und zusätzlich Ultraschall-Laufzeit-, -Amplituden- und/oder Wirbelstromimpedanzmessungen mit elektromagnetischen Ultraschallwandlern (3-6) im Bereich der Messstelle durchgeführt werden, um über die gemessene Temperatur aus den zusätzlichen Messungen die Spannungen und/oder Spannungsgradienten über die Wanddicke der Körper (1) zu bestimmen,
wobei aus der gemessenen Temperatur ein Temperaturverlauf zwischen einer Innenfläche und der Außenoberfläche ermittelt wird und die Bestimmung der Spannungen und/oder Spannungsgradienten auf Basis eines Schichtmodells (9) der Wand des Körpers (1) erfolgt, das als Eingangsgrößen (8) den ermittelten Temperaturverlauf sowie einen daraus abgeleiteten Spannungsverlauf sowie die gemessenen und temperaturkorrigierten Ultraschall-Laufzeiten, -Amplituden und Wirbelstromimpedanzen nutzt und als Ausgangsgrößen (10) schichtbezogene Ultraschall-Laufzeiten, -Amplituden, Wirbelstromimpedanzen und Spannungsverläufe liefert, wobei die schichtbezogenen Spannungsverläufe durch eine iterative Optimierung des Schichtmodells aus den schichtbezogenen Ultraschall-Laufzeiten, -Amplituden und Wirbelstromimpedanzen bestimmt werden.

2. Verfahren nach Anspruch 1,
**dadurch gekennzeichnet,**
**dass** mit den elektromagnetischen Ultraschallwandlern (5, 6) jeweils zwei senkrecht zueinander linear polarisierte Transversalwellen senkrecht in die Wand des Körpers (1) eingestrahlt werden, um Ultraschall-Laufzeiten und -Amplituden im Puls-Echo-Betrieb zu messen.

3. Verfahren nach Anspruch 2,
**dadurch gekennzeichnet,**
**dass** bei der Messung an einem Rohr als Körper (1) eine der Transversalwellen in axialer Richtung des Rohres und die andere in Umfangsrichtung des Rohres linear polarisiert ist.

4. Verfahren nach Anspruch 2 oder 3,
**dadurch gekennzeichnet,**
**dass** zusätzlich zwei Paare elektromagnetischer Ultraschallwandler (3-4) in getrennter Sende-Empfangs-Anordnung eingesetzt werden, die Rayleighwellen oder horizontal polarisierte Transversalwellen erzeugen, wobei die zwei Paare unter einem Winkel von 90° zueinander an der Messstelle angeordnet werden.

5. Verfahren nach einem der Ansprüche 1 bis 4,
**dadurch gekennzeichnet,**
**dass** die elektromagnetischen Ultraschallwandler (3-6) an mehreren über die Außenoberfläche verteilten Messstellen eingesetzt werden.

## Claims

1. Method for detecting temporally variable thermomechanical stresses and/or stress gradients across the wall thickness of metal bodies (1), in particular pipelines, in which a temperature is measured in at least one measurement point on an outer surface of the body (1), in addition ultrasonic transit-time, amplitude and/or eddy current impedance measurements are carried out with electromagnetic ultrasonic transducers (3-6) in the area of the measurement point in order to determine the stresses and/or stress gradients across the wall thickness of metal bodies (1) from the additional measurements in conjunction with the temperature measurement, wherein a temperature profile between an inner surface and the outer surface is determined from the measured temperature and the determination of the stresses and/or stress gradients is made on the basis of a layer model (9) of the wall of the body (1), which model uses the determined temperature profile and a stress profile derived therefrom as well as the measured and temperature-adjusted ultrasonic transit-times, amplitudes and eddy current impedances as input variables (8) and delivers ultrasonic transit-times, amplitudes, eddy current impedances and stress profiles relating to individual layers as output variables (10), wherein the layer-related stress profiles are determined from the layer-related ultrasonic transit-times, amplitude and eddy current impedances by an iterative optimisation of the layer model.

2. Method according to Claim 1, **characterized in that** two mutually perpendicular linearly polarised transverse waves are radiated perpendicularly into the wall of the body (1) by each of the electromagnetic ultrasonic transducers (5, 6) in order to measure ultrasonic transit-times and amplitudes in pulse-echo mode.

3. Method according to Claim 2, **characterized in that** for measuring on a pipe as a body (1), one of the transverse waves is linearly polarised in the axial direction of the pipe and the other is linearly polarised in the circumferential direction of the pipe.

4. Method according to Claim 2 or 3, **characterized in that** in addition two pairs of electromagnetic ultrasonic transducers (3-4) are used in a separated transmit-receive arrangement, which generate Rayleigh waves or horizontally polarized transverse waves, wherein the two pairs are arranged at an angle of 90° to one another at the measurement point.

5. Method according to any one of Claims 1 to 4, **characterized in that** the electromagnetic ultrasonic transducers (3-6) are used at multiple measurement points distributed over the outer surface.

## Revendications

1. Procédé de détection de tensions thermomécaniques et/ou gradients de tension variables temporellement sur l'épaisseur de paroi de corps métalliques (1), notamment des conduites de tuyauterie, dans lequel une température est mesurée sur au moins un point de mesure sur une surface extérieure du corps (1) et en outre des mesures de période d'ultrasons, d'amplitude d'ultrasons et/ou d'impédance de courant de Foucault sont effectuées avec des convertisseurs d'ultrasons (3-6) au niveau du point de mesure, afin de déterminer par l'intermédiaire de la température mesurée d'après les mesures supplémentaires les tensions et/ou les gradients de tension sur l'épaisseur de paroi du corps (1), dans lequel d'après la température mesurée une courbe de température entre une surface intérieure et la surface extérieure est déterminée et la détermination des tensions et/ou des gradients de tension a lieu sur la base d'un modèle de couches (9) de la paroi du corps (1), qui utilise comme grandeurs d'entrée (8) la courbe de température déterminée ainsi qu'une courbe de tension déduite de celle-ci ainsi que les périodes d'ultrasons, les amplitudes d'ultrasons et les impédances de courant de Foucault mesurées et corrigées en température et délivre comme grandeurs de sortie (10) des périodes d'ultrasons, des amplitudes d'ultrasons, des impédances de courant de Foucault et des courbes de tension relatifs aux couches, dans lequel les courbes de tension relatives aux couches sont déterminées par l'intermédiaire d'une optimisation itérative du modèle de couches d'après les périodes d'ultrasons, les amplitudes et les impédances de courant de Foucault relatives aux couches.

2. Procédé selon la revendication 1, **caractérisé en ce que** avec les convertisseurs d'ultrasons électromagnétiques (5,6) respectivement deux ondes transversales polarisées linéairement perpendiculairement l'une à l'autre sont irradiées dans la paroi du corps (1), afin de mesurer les périodes et les amplitudes d'ultrasons en fonctionnement à impulsions reflétées.

3. Procédé selon la revendication 2, **caractérisé en ce que** lors de la mesure sur un tuyau faisant office de corps (1) une des ondes transversales est polarisée linéairement dans la direction axiale du tuyau et l'autre est polarisée linéairement dans la direction circonférentielle du tuyau.

4. Procédé selon la revendication 2 ou 3, **caractérisé en ce que** en outre deux paires de convertisseurs d'ultrasons électromagnétiques (3-4) sont employées en disposition d'émission-réception séparée, qui génèrent des ondes de Rayleigh ou des ondes transversales polarisées horizontalement, dans lequel les deux paires sont disposées l'une par rapport à l'autre en définissant un angle de 90° sur le point de mesure.

5. Procédé selon une des revendications 1 à 4, **caractérisé en ce que** les convertisseurs d'ultrasons électromagnétiques (3-6) sont employés sur plusieurs points de mesure répartis sur la surface extérieure.
